# EUROPEAN PATENT APPLICATION

(11) **EP 4 375 928 A1**
(43) Date of publication of application: **29.05.2024**
(21) Application number: 22209010.2
(22) Date of filing: 23.11.2022
(51) Int. Cl.: G06T 7/60, G06T 11/00

(54) **METHOD FOR LENGTH MEASUREMENT WITHIN DENTAL PANORAMIC IMAGES**

(71) Applicant: DENTSPLY SIRONA Inc., York, PA 17401 (US); Sirona Dental Systems GmbH, 64625 Bensheim (DE)
(72) Inventor: Eichner, Stefan, 64625 Bensheim (DE)
(74) Representative: Özer, Alpdeniz

(57) **Abstract**

The present invention relates to a method for measuring the length of structures displayed in a panoramic image (la, lb) of a patient, comprising: (S1) defining a 3D surface (2) describing in space the positions of patient's mapping points to be reconstructed in a panoramic imaging; (S2) providing projection images of the panoramic imaging, wherein the projection images have image points which depict the mapping points (S) of the 3D surface (2); (S3) determining the projection geometries of the individual projection images on the basis of their imaging times and imaging course during the panoramic imaging, wherein the projection geometries describe the spatial relationship of the projection images to the 3D surface (2); (S4) determining the image points in the projection images which depict the mapping points (S) of the 3D surface (2) to be reconstructed by using the projection geometries of the projection images; (S5) generating a panoramic image (la, lb) by summing the values of the determined image points within the projection images which depict the same mapping point (S) of the 3D surface (2) to be reconstructed; (S6) length measurement between two image points (PI, P2; P1', P2') on the generated panoramic image (la; lb) using the corresponding positions of the mapping points (S1, S2; S1', S2') within the 3D surface (2), wherein the length (L; L') is calculated either along the shortest path (W) in space or along a path (W') on the 3D surface (2); (S7) outputting the result of the length measurement by means of an output device.

## Description

### TECHNICAL FIELD OF THE INVENTION

The present invention relates to a method for generating a panoramic image of a patient in the dental field, and in particular to the length measurement of dental structures displayed in the panoramic image.

### BACKGROUND OF THE INVENTION

Panoramic images give dentists a quick overview of a patient's dental conditions. The dose required to create the panoramic image is very low. Panoramic images are used by dentists to prepare for treatment and allow a quick initial diagnosis in problem cases. A panoramic image is a standard procedure of all extraoral dental radiographic procedures. A classic planar 2D representation of the panoramic image is common. The panoramic image is generally reconstructed using a shift-and-add procedure or more complex procedures. A panoramic image depicts the structures located in a layer to be sharply mapped within the patient's jaw.

For implant planning, the dentist must determine dimensions about the geometry of the jaw. In particular, the distance to the maxillary sinus and the nerve canal are important for the implant planning and the implementation. This prevents damage to the patient and thus enables an improvement in the quality of the implant placement and the patient situation. The distance to neighboring teeth is also relevant here. Usually, such length measurements of structures represented by the image points or pixels of the panoramic image are measured directly on the screen using a *digital ruler.* However, this type of length measurement is not reliable or inaccurate according to the state of the art within such extraoral panoramic images and thus the risk of misdiagnosis and incorrect treatment is very high.

### DISCLOSURE OF THE INVENTION

The inventor is not aware of any prior art measurement method in which the length measurements of the structures represented by the panoramic image are realized by means of a 3D surface describing the positions of the mapped structures in 3D space.

An objective of the present invention is to provide a method for measuring the length of structures displayed in a panoramic image of a patient, in which the length to be measured describes the shortest path in 3D space or a curved path along the dental structures.

A further objective of the present invention is to provide an x-ray system that applies the method according to the invention.

These objectives are achieved by the method as defined in claim 1, and the x-ray system as defined in claim 2. The subject-matters of the dependent claims define further developments and preferred embodiments.

The method according to the invention is a computer-implemented method and is used to measure the length of structures displayed in a panoramic image of a patient. The method comprises the following steps: Defining a 3D surface describing in 3D space the positions of patient's mapping points to be reconstructed in a panoramic imaging; Providing projection images of the panoramic imaging, wherein the projection images have image points which depict the mapping points of the 3D surface; Determining the projection geometries of the individual projection images on the basis of their imaging times and imaging course during the panoramic imaging, wherein the projection geometries describe the spatial relationship of the projection images to the 3D surface; Determining the image points in the projection images which depict the mapping points of the 3D surface to be reconstructed by using the projection geometries of the projection images; Generating a panoramic image by summing the values of the determined image points within the projection images which depict the same mapping point of the 3D surface to be reconstructed; Length measurement between two image points on the generated panoramic image using the corresponding positions of the mapping points within the 3D surface, wherein the length is calculated either along the shortest path in 3D space or along a path on the 3D surface; Outputting the result of the length measurement by means of an output device.

An advantageous effect of the invention is that by using the 3D surface which describes in 3D space the positions of the patient's mapping points to be reconstructed as a panoramic image, the length measurement becomes more reliable and accurate, thereby reducing the risk of misdiagnosis and incorrect treatment.

In sum, the method according to the invention creates diagnostic and therapeutic added value for the dentist through more reliable diagnosis resulting from the more precise measurement possibilities.

The x-ray system according to the invention is used to measure the length of structures displayed in a panoramic image of a patient. The x-ray system comprises a computing unit that executes the method. In a preferred embodiment, the x-ray system comprises: an input device such as a mouse and a keyboard, and a display device such as a screen. The user can manually select two image points in the panoramic image displayed on the screen via the input device according to a therapy planning, e.g., implant planning. Alternatively, these image points can be determined automatically by the computing unit in accordance with the therapy planning by means of a recognition software. Preferably, the recognition software can use machine learning trained to recognize the structures. The computing unit performs the method based on the user input or the automatic recognition.

In another preferred embodiment, the generated panoramic image is displayed on the screen as a 2D representation. Alternatively, the generated panoramic image can be displayed on the screen as a 3D representation. Preferably, the 2D and 3D representations can be optionally selected by the user.

In another preferred embodiment, the orientation of the 3D representation of the generated panoramic image on the screen can be changed by the user using the input device. For example, the 3D representation can be rotated, shifted and/or resized. Changing the orientation may further assist the user in selecting the image points for length measurement of the structures.

### BRIEF DESCRIPTION OF THE DRAWINGS

In the following description, the present invention will be explained in more detail with reference to the exemplary embodiments and with reference to the drawings, wherein.
- Fig. 1 -: shows a schematic drawing of an x-ray system according to an embodiment of the invention;
- Fig. 2 -: shows a schematic representation of a 3D surface in space describing the location of the patient's mapping points to be reconstructed according to an embodiment of the invention;
- Fig. 3 -: shows a schematic 2D representation of a panoramic image according to an embodiment of the invention;
- Fig. 4 -: shows a schematic 3D representation of a panoramic image according to an embodiment of the invention;
- Fig. 5a -: shows a schematic 2D representation of a panoramic image according to an embodiment of the invention in which two image points are indicated for length measurement;
- Fig. 5b -: shows another schematic 2D representation of a panoramic image according to an embodiment of the invention in which two image points are indicated for length measurement;
- Fig. 6a -: shows a schematic 3D representation of a panoramic image according to an embodiment of the invention in which two image points are indicated for length measurement;
- Fig. 6b -: shows another schematic 3D representation of a panoramic image according to an embodiment of the invention in which two image points are indicated for length measurement;
- Fig. 7a -: shows a schematic representation of the 3D surface of Fig. 2, in which the length is calculated along the shortest path in space between the corresponding two mapping points;
- Fig. 7b -: shows a schematic representation of the 3D surface of Fig. 2, in which (i) the length is calculated along the shortest path in space between the corresponding two mapping points, and (ii) the length is calculated along a path lying on the 3D surface between the two corresponding mapping points.

The reference numbers shown in the drawings designate the elements listed below, which are referred to in the following description of the exemplary embodiments.
- 100.: X-ray system
- 101.: X-ray device
- 102.: X-ray source
- 103.: X-ray detector
- 104.: Operating unit (user interface)
- 105.: Head fixation
- 106.: Bite block
- 107.: Computing unit (Computer)
- 108.: Display device (Screen)
- 109.: Input device (Keyboard)
- 110.: Input device (Mouse)
- 1a.: Panoramic image (2D representation)
- 1b.: Panorama image (3D representation)
- 2.: 3D surface

P1, P2; P1', P2': Image points on the generated panoramic image;
S1, S2; S1', S2': Mapping points on the 3D surface corresponding to the image points;
L: Length along the shortest path in space between the mapping points;
L': Length along the 3D surface between the mapping points;
W: shortest path (*straight path*) between the mapping points;
W': Path along the 3D surface (*curved path*) between the mapping points.

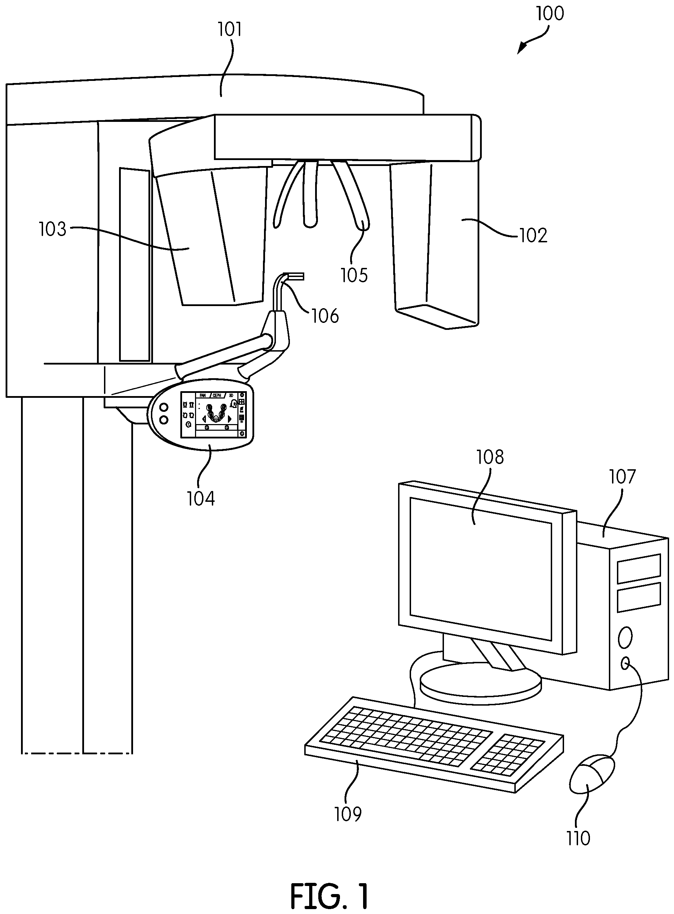

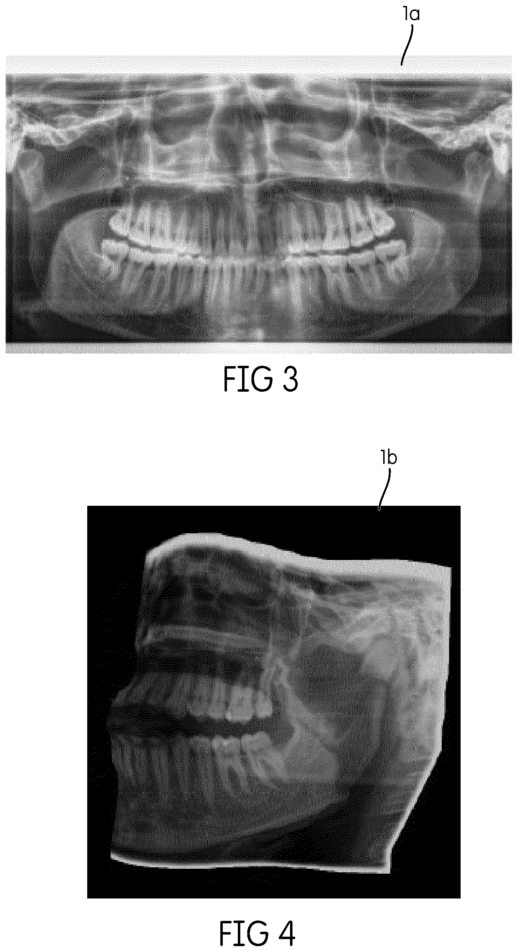

The method according to the invention, which is explained in detail below, is a computer-implemented method and can be carried out on a computer-implemented x-ray system (100) as shown in an embodiment in Fig. 1. The x-ray system (100) is used to generate a two-dimensional or three-dimensional panoramic image (1a;1b) as shown in Figures 3 and 4 respectively. The present invention also includes a corresponding computer program having computer-readable code for implementing the method. The computer program is provided on a computer readable storage medium accessible to the x-ray system (100). The computerized x-ray system (100) comprises an x-ray device (101) for performing patient imaging, which generates x-ray projection images or a sinogram. The x-ray device (101) has an x-ray source (102) and an x-ray detector (103) that are rotated around the patient's head during the imaging. The trajectory of the x-ray source (102) and the x-ray detector (103) during the imaging can describe a circular path. However, it can also assume a form deviating from this. If several actuators (not shown) are controlled simultaneously, a trajectory deviating from a pure circular path around the patient's head can be achieved. The patient's head is positioned in the x-ray device (101) with the bite block (106) and optionally with the head fixation (105). The trajectory (*course*) of the x-ray source (102) and the x-ray detector (103) with respect to the bite block (106) and the head fixation (105) are known. The x-ray detector (103) detects the x-rays emitted by the x-ray source (102) during the rotation. The projection images are acquired, namely read out from the x-ray detector (103). The computerized x-ray system (100) also comprises an operating unit (104) such as a user interface, a computing unit (107) e.g., a computer which can be connected to the x-ray device (101), and a display device such as a screen (108) for visualizing the data sets. The panoramic image (1a; 1b) is reconstructed by the computing unit (107). The computer may be connected to the x-ray device (101) via a local area network (not shown) or, alternatively, via the Internet. The computer may be also part of a cloud. Alternatively, the computer may be integrated into the x-ray device (101). Alternatively, all or some of the computations may take place in the cloud as cloud computing. The computer executes the computer program and provides the data sets, e.g., the panoramic images for visualization on the screen (108). The screen (108) may be provided spatially separate from or integrated with the x-ray device (101). Preferably, the computer may also control all functions of the x-ray device (101). Alternatively, separate computers may be used for the control, operation, and panoramic image reconstruction.

The x-ray system (100) is preferably configurable as an IoT system and can be bidirectionally connected via a local area network and/or the Internet (not shown) to other dental devices such as optical intraoral scanners, dental milling machines, additive manufacturing machines, and the like for cloud computing, data exchange, remote control, and the like.

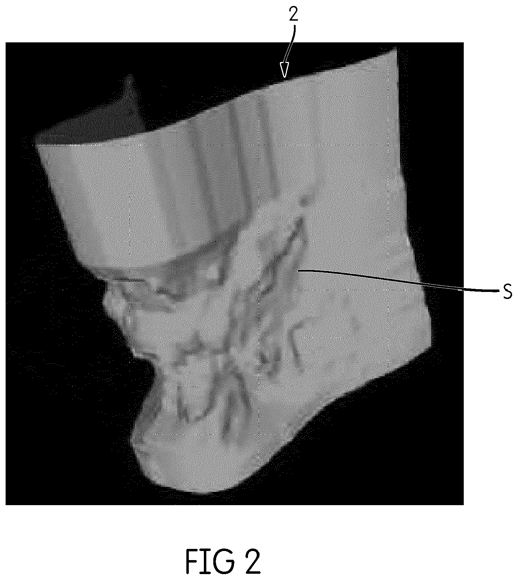

The computer-implemented method is also used to measure the length of structures displayed in the panoramic image (1a,1b) of the patient. The method comprises the following steps S1 to S8:
In step S1, a 3D surface (2) is defined as shown in Fig. 2, which describes in space the location of the patient's mapping points to be reconstructed. The 3D surface (2) has a spatial relationship to the bite block (106) and the head fixation (105) which is known to the x-ray system (100).

In step S2 the projection images (not shown) of the panoramic image are provided. The projection images are 2D projection images which e.g., form a sinogram. The projection images have image points that depict the mapping points (S) of the 3D surface (2).

In step S3, the projection geometries of the individual projection images are determined based on their imaging times and the imaging trajectory of the panoramic imaging. The projection geometries describe the spatial relationship of the projection images to the 3D surface (2).

In step S4, the image points of the projection images are determined using the projection geometries of the projection images, that depict the mapping points (S) of the 3D surface (2) to be reconstructed.

In step S5, the panoramic image (1a,1b) is generated by summing up the values of the determined image points within the projection images that depict the same mapping point (S) of the 3D surface (2) to be reconstructed. Fig. 3 and Fig. 4 show such generated panoramic images (1a, 1b) which may be two-dimensional (2D) and three-dimensional (3D) respectively.

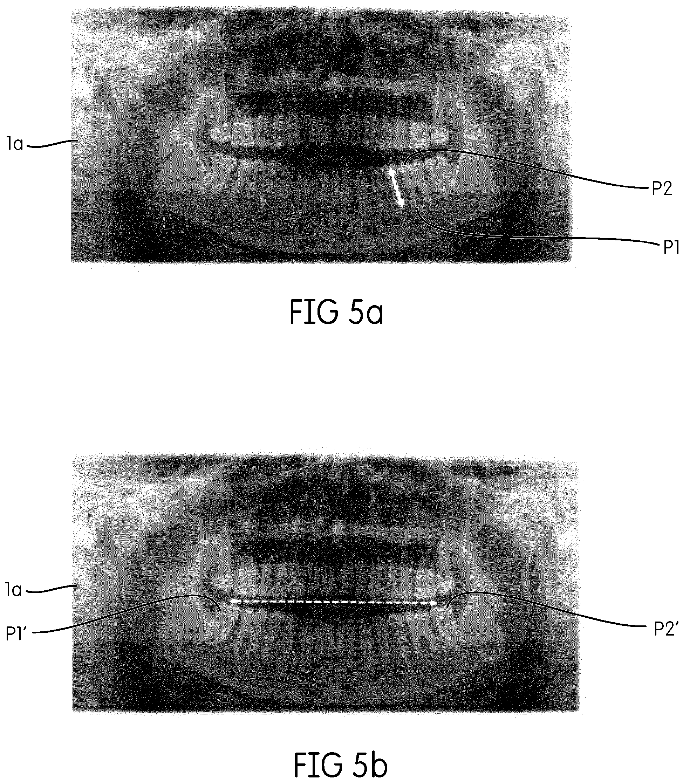

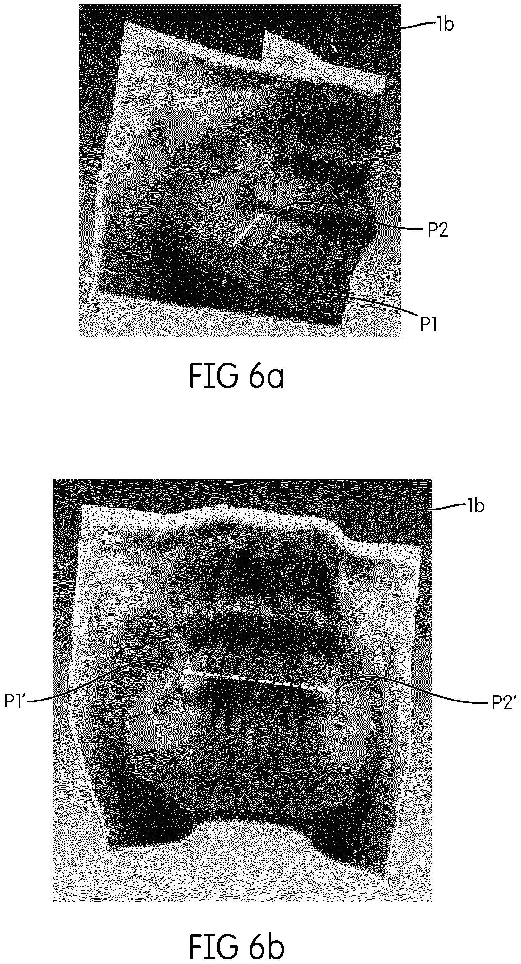

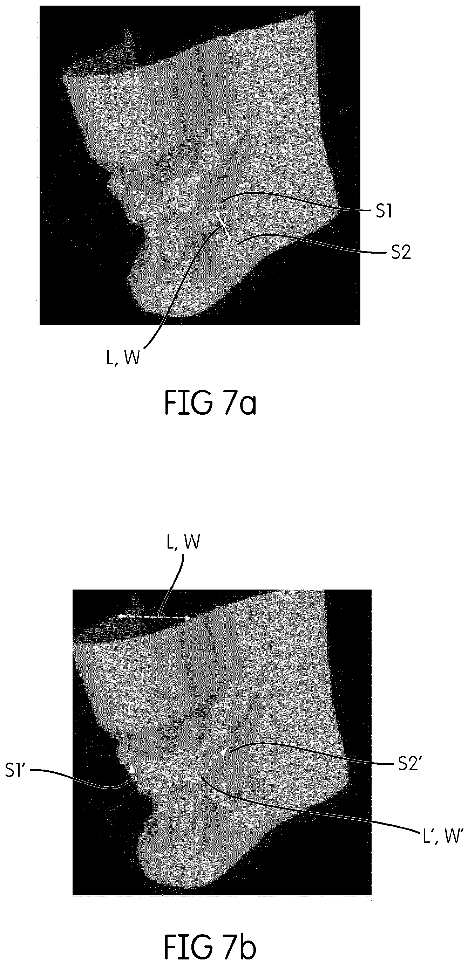

In step S6, a length measurement is performed between two image points (P1, P2; P1', P2') on the generated panoramic image (1a;1b) using the corresponding positions of the mapping points (S1, S2; S1',S2') within the 3D surface (2). Fig. 5a shows an example of such two image points (P1, P2) in the 2D panoramic image (1a). Fig. 5b shows another example of such two image points (P1', P2') on the 2D panoramic image (1a). Fig. 6a shows another example of such two points (P1, P2) on the 3D panoramic image (1b). Fig. 6a shows another example of such two pixels (P1', P2') on the 3D panoramic image (1b). Fig.7a and Fig. 7b show the corresponding positions of the mapping points (S1, S2; S1', S2') within the 3D surface (2). In a first alternative as illustrated in Fig.7a and 7b, it is shown how the length (L) is calculated along the shortest path (W) in space. The length (L) is the Euclidean distance between the image points (P1, P2; P1', P2') in Euclidean space. It can be calculated from the Cartesian coordinates of the image points (P1, P2; P1',P2') using the Pythagorean theorem. In a second alternative as also illustrated in Fig. 7b it is shown how the length (L') is calculated along a path (W') on the 3D surface (2). The length (L') can be calculated by dividing the path (W') into infinitesimal linear segments, where the endpoints of the linear segments lie on the 3D surface (2) and preferably in a plane cutting the 3D surface (2) and substantially parallel to the jaws.

In step S8, the result of the length measurement is output by means of an output device.

As shown in Fig. 1, the x-ray system (100) comprises an input device (109;110) for manual input of two image points (P1, P2; P1',P2') on the generated panoramic image (1a; 1b) by the user by means of the screen (108). The computing unit (107) is configured to execute the method steps S1 to S8 based on the user input. Alternatively, the image points (P1, P2; P1',P2') can be determined automatically by the computer program through automatically recognizing relevant structures for measurement.

The generated panoramic image (1a; 1b) is displayed on the screen (108) as a 2D or 3D representation . The orientation of the 3D representation of the generated panoramic image (1b) can be changed on the screen (108) by the user by means of the input devices (109;110).

### Applications

The length measurements of structures in the panoramic image (1a, 1b) of a patient can be used to perform dental treatments, such as restorative treatments, endodontic treatments, periodontal treatments, implant treatments, aligner treatments, orthodontic treatments, and the like. In Fig. 5a, the image points (P1, P2) show a root tip and the tooth crown. The corresponding length (L) in Fig. 7a, could be relevant in implant treatments or endodontic treatment. In Fig. 6b, the image points (P1', P2') show two molars on the left and right sides of the jaw. The corresponding length (L') in Fig. 7b, could be relevant orthodontic treatment. In addition, the corresponding length (L') in Fig. 7b, could be relevant for aligner treatment. For example, the wire length for a brace or the dimensions of an impression tray could be calculated. The dentist can define the image points (P1, P2; P1', P2') as desired according to the therapeutic as well as the diagnostic questions in order to measure the relevant structures. The structures can include teeth, roots, nerve canals, temporomandibular joints, jaw bones, gaps between teeth, etc.

## Claims

1. Method for measuring the length of structures displayed in a panoramic image (1a, 1b) of a patient, comprising:
(S1) defining a 3D surface (2) describing in space the positions of patient's mapping points to be reconstructed in a panoramic imaging;
(S2) providing projection images of the panoramic imaging, wherein the projection images have image points which depict the mapping points (S) of the 3D surface (2);
(S3) determining the projection geometries of the individual projection images on the basis of their imaging times and imaging course during the panoramic imaging, wherein the projection geometries describe the spatial relationship of the projection images to the 3D surface (2);
(S4) determining the image points in the projection images which depict the mapping points (S) of the 3D surface (2) to be reconstructed by using the projection geometries of the projection images;
(S5) generating a panoramic image (1a, 1b) by summing the values of the determined image points within the projection images which depict the same mapping point (S) of the 3D surface (2) to be reconstructed;
(S6) length measurement between two image points (P1, P2; P1', P2') on the generated panoramic image (1a; 1b) using the corresponding positions of the mapping points (S1, S2; S1', S2') within the 3D surface (2), wherein the length (L; L') is calculated either along the shortest path (W) in space or along a path (W') on the 3D surface (2);
(S7) outputting the result of the length measurement by means of an output device.

2. An x-ray system (100) for generating a panoramic image (1a; 1b), comprising:
an x-ray source (102) and an x-ray detector (103) for detecting the x-rays emitted by the x-ray source (102) during one revolution;
a computing unit (107) for reconstructing the panoramic image (1a; 1b);
an input device (109; 110) for manual selection and input of two image points (P1, P2; P1', P2') of the generated panoramic image (1a; 1b) by the user by using of a screen (108);
wherein the computing unit (107) is configured to perform the method according to claim 1 on the basis of the user input.

3. The x-ray system (100) according to claim 3, **characterized in that** the generated panoramic image (1a; 1b) is displayed on the screen (108) as a 2D or 3D representation.

4. The x-ray system (100 ) according to claim 4, **characterized in that** the orientation of the 3D representation of the generated panoramic image (1b) on the screen (108) can be changed by the user by means of the input device (109; 110).
